# EUROPÄISCHE PATENTSCHRIFT

(11) **EP 0 655 112 B1**
(45) Veröffentlichungstag und Bekanntmachung des Hinweises auf die Patenterteilung: **08.05.1996**
(21) Anmeldenummer: 93917557.6
(22) Anmeldetag: 13.08.1993
(51) Int. Cl.: F16F 15/16

(54) **VERDRÄNGUNGSTILGER, INSBESONDERE FÜR KOLBENKRAFTMASCHINEN**
DISPLACEMENT VIBRATION DAMPER, ESPECIALLY FOR PISTON ENGINES
AMORTISSEUR DE VIBRATIONS A DEPLACEMENT, NOTAMMENT POUR MOTEURS ALTERNATIFS

(30) Priorität: 24.08.1992 DE 4228022
(43) Veröffentlichungstag der Anmeldung: 31.05.1995
(73) Patentinhaber: HASSE & WREDE GmbH, D-12347 Berlin (DE)
(72) Erfinder: PAPE, Rolf, D-14169 Berlin (DE)
(86) Internationale Anmeldenummer: DE9300735
(87) Internationale Veröffentlichungsnummer: WO9404845

(56) Entgegenhaltungen:
- DE-A- 2 818 296
- DE-A- 3 151 914
- DE-B- 1 233 215
- DE-C- 307 086

## Beschreibung

Die Erfindung betrifft einen Verdrängungstilger nach dem Gattungsbegriff des Patentanspruches 1.

Bekannt sind Schwingungsdämpfer für Torsionsschwingungen (DE-AS 1 233 215), bei welchen eine Schwungmasse in einem allseitig geschlossenen Gehäuse angeordnet ist. Das Gehäuse ist mit der Welle, deren Schwingungen gedämpft werden sollen, starr verbunden; es sind Federelemente vorgesehen, welche in Form von Speichen die Primärmasse mit der Sekundärmasse koppeln, wobei die Speichen mit dem in einem geschlossenen Gehäuse sitzenden Schwungring oder mit dem Primärteil oder mit beiden einstückig ausgebildet sein können. Das Gehäuse ist teilweise mit Flüssigkeit hoher Viskosität gefüllt, welche zur hydrodynamischen Dämpfung in Spaltbereichen zwischen Primärmasse und Sekundärmasse beiträgt.

Vergleichbare Anordnungen bekannter Art (DE-PS 307 086) sehen anstelle der federnden Speichen Schrauben- bzw. Druckfedern vor, welche zwischen Vorsprüngen einer frei drehbaren Masse und Vorsprüngen eines die drehbare Masse aufnehmenden Gehäuses drehelastisch koppelnd ausgebildet sind. Bei Tilgeranordnungen dieser Bauweise sind Drosselorgane aufweisende Leitungen vorgesehen, welche jeweils Funktionskammern zwischen den wechselweise einander nähernden Vorsprüngen der frei drehbaren Masse und des Gehäuses verbinden, derart, daß Drehschwingungen unter Drosselung abgebremst werden können.

Bei einer weiteren bekannten Tilgeranordnung (GB-PS 1 239 450) sind als federnde Elemente zwischen Primärteil bzw. Primärmasse und Sekundärmasse hochkant wirkende und geschichtete Federelemente vorgesehen, welche zur drehelastischen Kopplung beitragen; es sind fernerhin in an sich bekannter Weise zur hydrodynamischen Dämpfung dienende Mittel vorgesehen.

Auf Hochkant-Biegung beanspruchte Federelemente, welche z.B. aus Stahlblech durch Feinstanzen herstellbar sind - auch als Bogenfedern bezeichnet - sind des weiteren bekannt (DE-OS 28 18 296). Bei mit derartigen Bogenfedern versehenen Drehschwingungstilgern der als bekannt geltenden Bauart sind gleichfalls Mittel zur hydrodynamischen Dämpfung vorgesehen; es handelt sich im wesentlichen um in verbleibenden Spalträumen zwischen Primärmasse und Sekundärmasse, d.h. zwischen einem Schwungring und einem den Schwungring umschließenden Gehäuse befindliches Dämpfungsmedium, wobei die zur federnden Ankopplung dienenden, hochkant biegebeanspruchten Federelemente innerhalb des durch das Dämpfungsmedium gefüllten Gehäuses angeordnet sind.

Bei Drehschwingungstilgern bzw. -dämpfern dieser bekannten Bauart setzt das viskose Dämpfungsmedium Schwingenergie in Wärme um, weil es zwischen den dicht benachbarten Wänden von Primär- und Sekundärteil wechselnder Scherbeanspruchung unterworfen wird. Die Leistungsfähigkeit des Verdrängungstilgers ist also in hohem Maße durch die zu erzielende Wärmeabfuhr beeinflußt. In gleicher Weise ist die Ausgestaltung der federnden Ankopplung von Sekundärmasse an Primärmasse für die Leistungsfähigkeit des Schwingungstilgers entscheidend. Schließlich sind es die am Einsatzort zur Verfügung stehenden baulichen Gegebenheiten, welche die Größe und somit die Grenzen der Leistungsfähigkeit im Einsatz eines Verdrängungstilgers, so z.B. im Einsatz bis 1 800 Umdrehungen pro Minute beeinflussen.

Davon ausgehend besteht die Aufgabe der Erfindung darin, einen Verdrängungstilger der in Rede stehenden Art so auszugestalten, daß bei baulich gedrängter Ausgestaltung hohe Leistungsfähigkeit hinsichtlich der Dämpfung und hinsichtlich der federnden Ankopplung erzielbar ist; im besonderen soll die Möglichkeit ausreichender Wärmeabfuhr z.B. bei Verwendung von Mineralöl als Dämpfungsmedium, gegeben sein. Auch soll es möglich sein, eine getrennte Beeinflussung von Verdrängungswirkung und elastischer Ankopplung vornehmen zu können.

Zur Lösung dieser Aufgabe dienen die Merkmale nach dem Kennzeichnungsteil des Patentanspruches 1.

Der Verdrängungstilger ist infolge seiner bezüglich der Primärmasse spiegelbildlichen Ausgestaltung der Sekundärmasse in sehr gedrängter Bauweise konzipiert, d.h. es ist möglich, je Seite des mit der Nabe verbundenen Steges geschichtete Pakete von Bogenfedern unterzubringen, welche zur formschlüssigen Verbindung zwischen Primärmasse und Sekundärmasse beitragen. Ein besonderer Vorteil der Konstruktion liegt in der Ausbildung der zur hydrodynamischen Dämpfung dienenden Funktionskammern radial außerhalb der Bogenfedern, wodurch eine hervorragende Wärmeabfuhr auf den gesamten Flächen der Seitenscheiben und des Außenrings, vorzugsweise bei Verwendung von Kühlrippen oder dgl., möglich ist. Die Ausbildung der Funktionskammern am Außenumfang ist auch vorteilhaft insofern, als durch Fliehkraft höherer Öl druck entsteht, wodurch Kavitation vermieden werden kann.

Der Dämpfer bzw. Verdrängungstilger, welcher auch in vorteilhafter Weise als Kupplung verwendbar ist, besitzt zudem Mittel, welche bei einfacher Ausgestaltung zu einer Veränderung der hydrodynamischen Dämpfungswirkung als auch zur Veränderung der elastischen Kopplung beitragen. So ist es durch Veränderung der Anzahl der Bogenfederschichten möglich, die Hochkant-Biegebeanspruchung der einzelnen Bogenfedern pro Seite des Tilgers zu verändern, während durch Bypass-Kanalverbindungen zwischen den Funktionskammern und zugeordnete Bypass-Schrauben die Strömungsverhältnisse für das Dämpfungsmedium veränderbar sind. Die Dämpfung ist also durch Veränderung der Spaltquerschnitte, der Spalthöhe und der Spaltlänge mit Hilfe von Einstellelementen veränderbar.

Die Anordnung von Bogenfedersteifigkeit und Funktionskammern für das Dämpfungsmedium ist in gleicher Weise für eine Kupplung einsetzbar, wenn die Sekundärmasse geeignete Mittel im Sinne einer Drehmomentenübertragung besitzt. Dies können Gewindebohrungen, Druchgangsbohrungen, Preßverbände oder ähnl. Mittel sein. Die Kupplung besitzt dann Mittel, welche bei einfacher Ausgestaltung zu einer Veränderung der hydraulischen Dämpfung und zur Veränderung der elastischen Koppelung beitragen. So ist durch die Veränderung der Anzahl der Bogenfedern in dem geschichteten Federpaket die Koppelsteifigkeit zwischen Primär- und Sekundärmasse einstellbar. Die Variation der Dämpfung erfolgt wie beim Tilger durch Bypass-Kanäle und Schrauben in den Drosselkanälen.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
- Fig.1: ist eine Schnittansicht eines Verdrängungstilgers nach der Erfindung, wobei die zu beiden Seiten der Stegmittellinie bestehenden Schnitthälften durch versetzte Ebenen gelegt sind;
- Fig.2: ist eine gegenüber Fig.1 im Maßstab vergrößerte, teilweise geschnittene Perspektivansicht eines Verdrängungstilgers, unter Darstellung der Bogenfedern einer Seite bei abgenommener Seitenscheibe;
- Fig.3: ist eine der Fig.2 vergleichbare Perspektivansicht bei aufgesetzter Seitenscheibe mit an dieser ausgebildeten Kühlrippen, und
- Fig.4-7: sind Schnittansichten weiterer Ausführungsbeispiele des Verdrängungstilgens unter Darstellung verschiedener Konfigurationen der Winkelringe und des Außenrings.

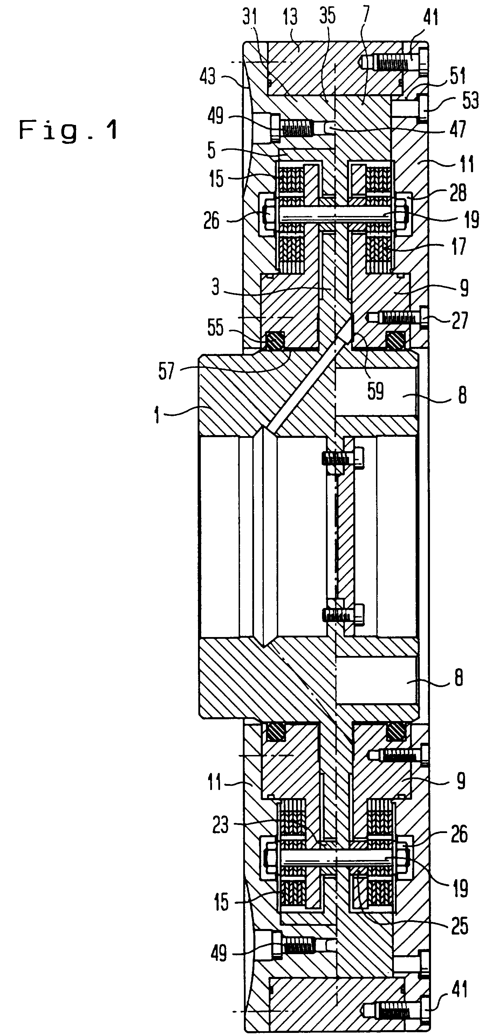

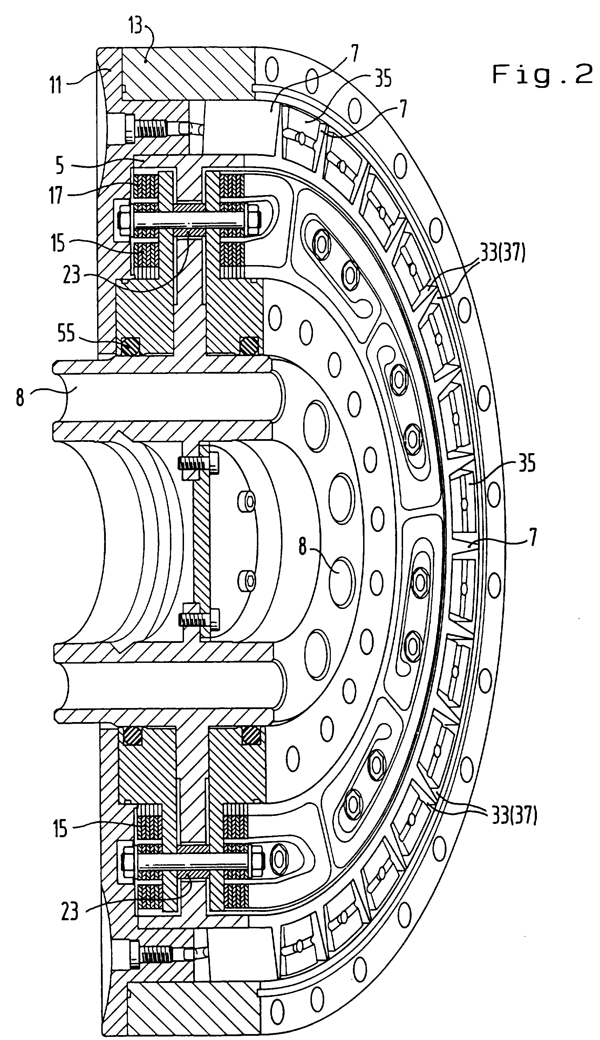

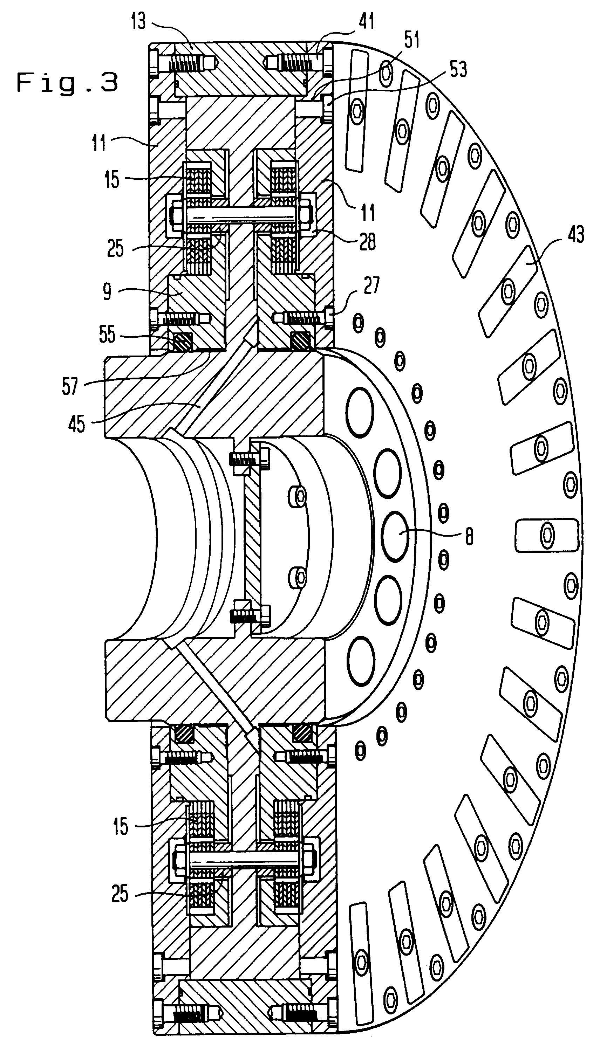

Der in Fig.1 der Zeichnung in versetzten Schnittebenen und in Fig.2 und 3 in perspektivischer Teilschnittansicht wiedergegebene Verdrängungstilger gemäß der Erfindung ist aus einer Primärmasse und aus einer Sekundärmasse zusammengesetzt. Die Primärmasse besteht nur aus der Nabe 1, welche aus einem massiven Nabenkörper gebildet ist und den eigentlichen Dämpfer von erfindungsgemäßer Anordnung trägt. Zur Nabe gehört ein schmaler Steg 3 (Fig.1-3), der außen am Umfang in einen axial breiten Gurt 5 übergeht. Der Steg 3 ist im Übergangsbereich zwischen der Nabe und dem Gurt durch Feinbearbeitung als axiales und radiales Gleitlager ausgebildet. Auf dem Gurt 5 sind radial nach außen sich erstreckend Verdrängerflügel 7 (Fig. 2 und 3) angebracht; um unabhängig von der Temperatur eine möglichst hohe Dämpfung zu erzielen, sind die Verdrängerflügel 7 scharfkantig ausgeführt. Zur besseren Ausnützung sind die Verdrängerflügel in Biegerichtung zur Einspannung hin stärker ausgebildet; hierdurch erhält man nahezu eine körpergleiche Randfaserspannung.

Die Nabe 1 ist gemäß Fig.2 und 3 von unter Winkelabstand zueinander axial sich erstreckenden Bohrungen 8 durchsetzt, welche zur Befestigung des Verdrängertilgers an der zu dämpfenden (nicht dargestellten) Welle dienen.

Die Sekundärmasse des Verdrängungstilgers setzt sich aus zwei Winkel ringen 9, zwei Seitenscheiben 11 und einem Außenring 13 zusammen. Die Seitenscheiben 11 und die Winkelringe 9 sind symmetrisch zur Nabe 1 bzw. dessen Steg 3 angeordnet, während der Außenring 13 den Dämpfer radial nach außen abschließt. Die Winkelringe 9 sind zu beiden Seiten des Stegs 3 angeordnet und schaffen über Bogenfedern 15 die elastische Verbindung von Primärmasse zu Sekundärmasse. Die Bogenfedern 15 sind im dargestellten Ausführungsbeispiel als hochkant gebogene Federn ausgebildet, welche im Betrieb hochkant im Wechsel beansprucht, d.h. gebogen werden. Die Federfesselung erfolgt mit Bogenfedern 15 der z.B. in Fig.2 der Zeichnung wiedergegebenen Ausführungsform, von denen jeweils fünf Stück gleichmäßig am Umfang verteilt beidseitig der Nabe bzw. des Stegs 3 angeordnet sind und hierbei Primär- und Sekundärmasse elastisch verbinden. Die Bogenfedern 15 bestehen in Abhängigkeit von der geforderten Torsionssteifigkeit aus einzelnen Bogenfederschichten 17, von welchen in der Zeichnung sechs Stück dargestellt sind. Die Anzahl der einzelnen Bogenfederschichten kann nach Bedarf gestuft werden. Die Bogenfedern sind vorzugsweise so ausgebildet, daß bei Verformung, d.h. bei Verdrehung an der Einspannstelle möglichst kein Biegemoment auftritt. Es gibt verschiedene Verfahren, um die Torsionssteifigkeit derartiger Bogenfedern optimal zu gestalten. Als Werkstoff ist für die Bogenfedern vorzugsweise hochfester Federwerkstoff vorgesehen.

Wie aus Fig.2 und 3 der Zeichnung zu ersehen ist, sind die Bogenfedern 15 jeweils mit Bolzen 19 wechselweise einerseits mit der Nabe bzw. dem Steg 3 verbunden und andererseits mit den beidseitig des Steges 3 befindlichen Winkelringen 9 verschraubt, d.h. mit Hilfe der Bogenfedern 15 ist die Koppelung zwischen Primärmasse und Sekundärmasse gebildet, wobei die Bogenfedern jeweils paarweise miteinander verbunden sind. Ein Vergleich der Fig.2 und 3 läßt erkennen, daß die Bolzen 19 eines Federeinspannendes einerseits den Steg mit Spiel durchsetzen, wobei sie sich durch Distanzstücke 23 für die Winkelringe 9 erstrecken (Fig.2), während sie andererseits unter enger Passung formschlüssig durch Bohrungen der Winkel ringe hindurchgeführt sind. Im Wechsel hierzu erstrecken sich die Bolzen 19 des jedweils anderen Federeinspannendes einerseits (Fig.3) unter enger Passung axial durch Bohrunen des Steges 3, während sie andererseits Distanzstücke 25 durchsetzen und mit diesen unter Spiel axial durch die Winkel ringe hindurchgeführt sind. Die Distanzstücke 25 dienen zur Abstandshalterung der Bogenfederpakete gegenüber dem Steg 3, wenn an den Enden der Bolzen befindliche Muttern 26 festgezogen sind (Fig.2 und 3). Durch diese Anordnung ist sichergestellt, daß die Bogenfedern die Primärmasse mit der Sekundärmasse verbinden und gleichzeitig bei Relativdrehung zwischen Primärmasse und Sekundärmasse Hochkant-Biegewechselbewegungen ausführen können.

Die Winkel ringe 9 sind axial außen mit Hilfe von Schrauben 27 mit den aufschiebbaren Seitenscheiben 11 verschraubt (Fig.3). Die Seitenscheiben 11 enthalten axiale Senkungen 28, welche die Muttern 26 zur Befestigung der Bogenfedern 15 aufnehmen und so groß dimensioniert sind, daß die Schwingbewegung der Sekundärmasse ohne Anschlagen bis zu einer maximalen Winkelamplitude ermöglicht wird. Radial weiter außen erstreckt sich von den beiden Seitenscheiben axial nach innen gerichtet jeweils ein Absatz 31, welcher auf seinem gesamten Kreisumfang in radialer Richtung bis auf eine bestimmte Breite mit Schlitzen 33 versehen ist. Der Absatz 31 besteht demnach auf dem gesamten Kreisumfang aus unter Winkelabstand zueinander axial nach innen sich erstreckenden Abschnitten 35, zwischen welchen sich die Schlitze 33 befinden. Die Schlitze 33 bilden die eigentlichen Funktionskammern 37 des Dämpfers, in welche die Verdrängerflügel 7 der Nabe 1 ragen (Fig.2).

Auf einem äußeren Zentrieransatz der beiden Seitenscheiben ist der Außenring 13 des Verdrängungstilgers aufgenommen, welcher die durch die Schlitze 33 gebildeten Kammern in radialer Richtung nach außen abschließt. Die Befestigung des Außenrings 13 an den beiden Seitenscheiben erfolgt durch unter Winkelabstand zueinander befindliche Schrauben 41. Auf ihrer Außenseite weisen die Seitenscheiben radial eingefräste Kühlrippen 43 auf, die zur Verbesserung der Strömung einen ausgerundeten Nutgrund besitzen. Ggf. können auch am Außenumfang des Außenrings 13 Kühlnuten bzw. -rippen vorgesehen sein, falls die abgeführte Wärmemenge erhöht werden muß.

Die hydrodynamische Dämpfung des Verdrängungstilgers gemäß der Erfindung erfolgt z.B. mit Mineralöl als Dämpfungsmedium, welches durch eine Bohrung 45 zur Druckölversorgung von der Kurbelwelle zugeleitet wird, d.h. das Mineralöl gelangt durch die Bohrung 45 in das Innere des Tilgers und in die Kammern zwischen den Verdrängerflügeln 7, wobei die hydrodynamische Dämpfung durch die Verdrängung des Mineralöls durch die engen Arbeitsspalte erzeugt wird, die zwischen den Verdrängerflügeln 7, den Seitenscheiben 11 und dem Außenring 13 entstehen. Bei einer federgekoppelten Relativbewegung zwischen Primär- und Sekundärmasse führt dies zu einer Strömung des Mineralöls durch die engen Arbeitsspalte der vorgenannten Art; dies führt zu einem Druckverlust auf der Drosselstrecke und entspricht einer hydraulischen Leistung, welche in Wärme umgewandelt wird (dissipiert). Dieser Druckverlust und der bei einer bestimmten Frequenz und Schwingwinkelamplitude auftretende Volumenstrom der vorgenannten Art entspricht dann einer bestimmten hydraulischen Verlustleistung. Die Funktionskammern können durch Bypass-Kanäle 47 verbunden sein, welche zwischen den axial einander gegenüberliegenden Absätzen 31 gebildet sein können und in welche Bypass-Schrauben 49 positionsveränderlich einschraubbar sind, um den Volumenaustausch zwischen den Kammern nach Maßgabe der erwünschten Dämpfung zu verändern. Um eine Feinabstimmung zu erreichen, sind unter Winkelabstand zueinander an der Außenseite der Seitenscheiben entlang eines Kreisringes für alle Kammern Bypass-Schrauben zur Veränderung des Querschnitts zugeordneter Bypass-Kanäle vorgesehen. Im dargestellten Ausführungsbeispiel ist also jeweils eine Bypass-Schraube pro Bypass-Kanal zwischen jeweils zwei benachbarten Arbeitskammern beider Seiten des Tilgers vorgesehen. Es sind auch Entlüftungsbohrungen 51 mit Entlüftungsschrauben 53 zur Entlüftung des Mineralöls am Außenumfang der Seitenscheiben (Fig.1) vorgesehen.

Gemäß Fig. 3 sind am Innenumfang der beiden Winkelringe 9 dynamisch wirkende Dichtelemente in Form von O-Ringen 55 vorgesehen. Die O-Ringe übernehmen bei Relativdrehung zwischen Primärmasse und Sekundärmasse, also bei Relativdrehung zwischen Nabe und Zwischenringen die Abdichtung des Tilgerinneren gegenüber Außenluft. Die O-Ringe sind vorzugsweise als vorgespannte Präzisions-O-Ringe ausgebildet; sie sind so vorgespannt, daß eine radiale Druckspannung nach innen vorliegt. Die Relativbewegung wird folglich nicht durch Reibung unter den O-Ringen 55, sondern durch deren Schubverformung realsiert. Präzisions-O-Ringe der genannten Art bestehen z.B. aus Viton; die ausreichende Dichtwirkung wird durch die genannte radiale Vorspannung erzielt, wodurch auch eine Steigerung der Dauerfestigkeit erreicht wird.

Es sind des weiteren am Innenumfang der Zwischenringe PTFE-Bänder 57 zur radialen Abstützung vorgesehen; zur axialen Führung sind z.B.PTFE-Scheiben 59 vorgesehen, welche seitlich in Senkungen des Stegs eingelegt sein können. Dichtelemente in Form von 0-Ringen sind zum Zwecke der Abdichtung des Tilgerinneren auch zwischen den Seitenscheiben und dem Außenring vorgesehen, desgleichen zwischen den Seitenscheiben und den Zwischenringen im Bereich des axial sich erstreckenden Absatzes zur Aufnahme der Bogenfedern. Die genannten Dichtelemente sind in gleicher Weise verwendbar, wenn das Innere des Verdrängungstilgers eine gekapselte Menge von Mineralöl enthält, wenn auf die Bohrung 45 und die Druckölversorgung verzichtet wird.

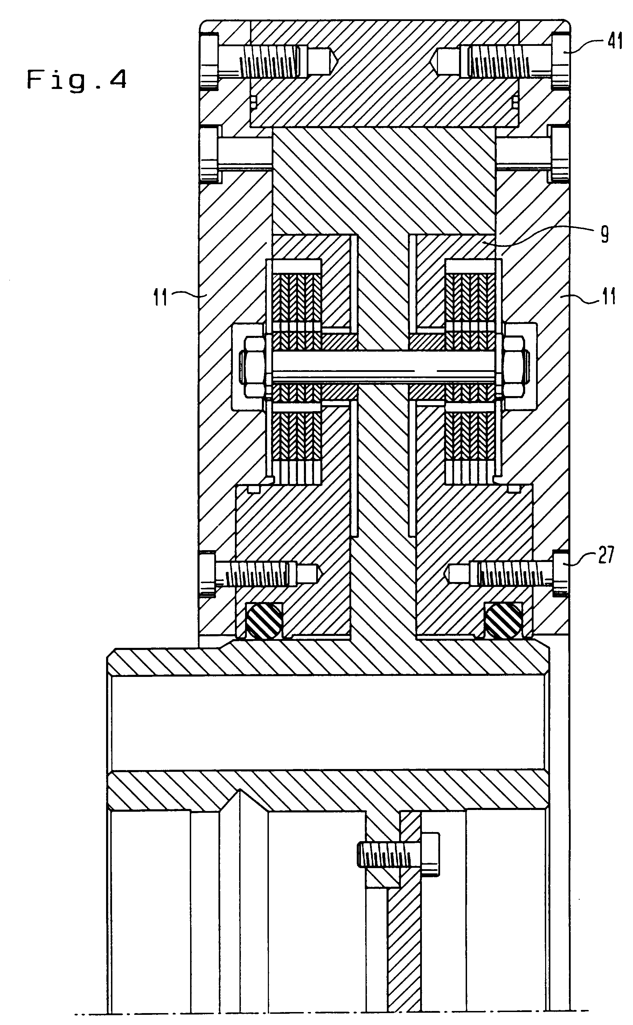

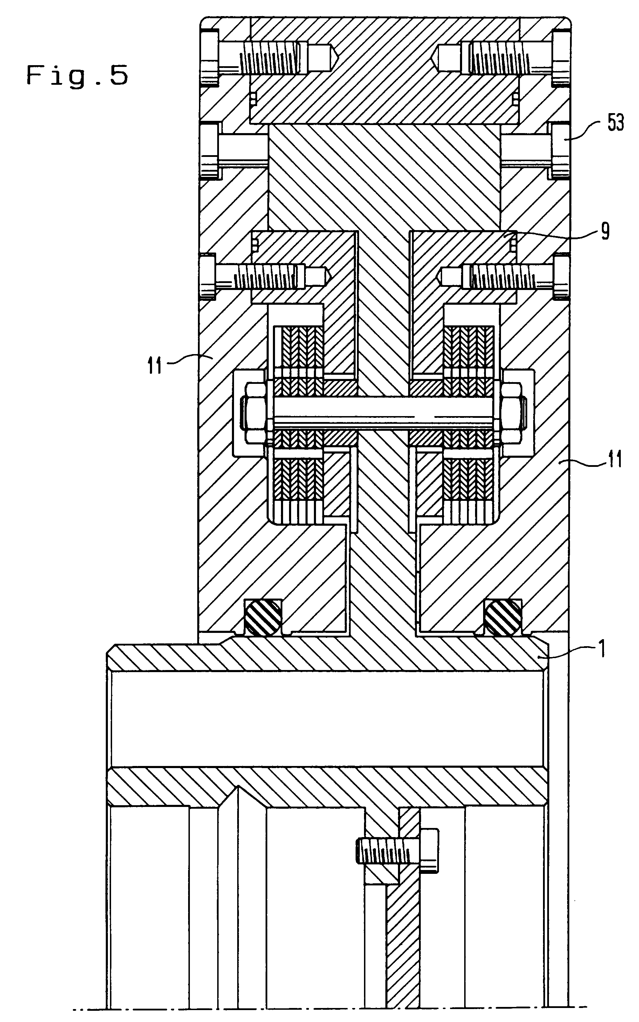

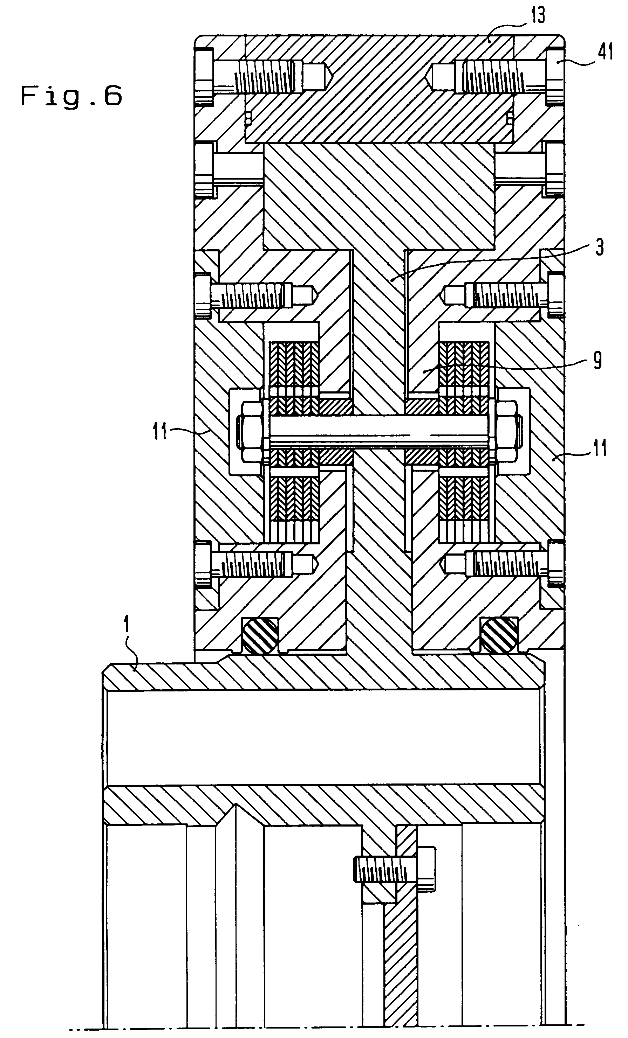

Die Fig. 4-7 geben weitere Ausführungsformen von Verdrängungstilgern nach der Erfindung wieder, wobei im wesentlichen unterschiedliche Konfigurationen der Winkelringe 9 in ihrer Zuordnung zu den Seitenscheiben 11 dargestellt sind. Die Winkel ringe 9 sind jeweils mit axialen Fortsätzen versehen, welche die Funktionskammern des Verdrängungstilgers radial innen begrenzen und teilweise direkt mit den Seitenscheiben 11 verschraubt sind. Der Gurt 5 der Ausführungsform nach Fig.1 ist hierbei nicht vorgesehen d.h. die Verdrängerflügel sind direkt auf dem Steg 3 aufgesetzt und mit diesem verbunden.

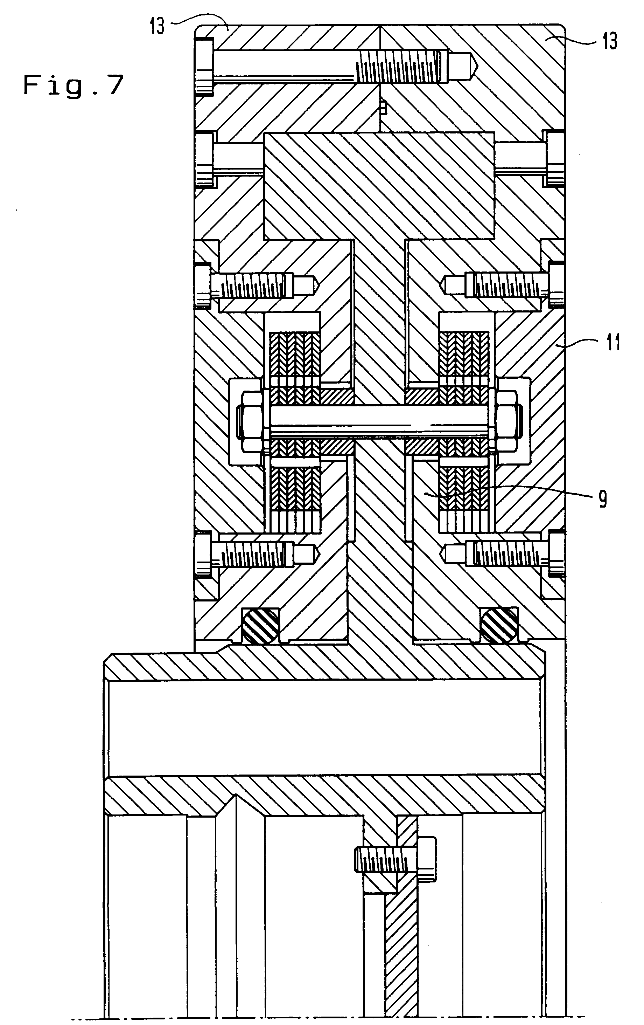

Bei der in Fig. 7 wiedergegebenen Anordnung ist ein radial geteilter Außenring 13 vorgesehen, welcher Fertigung und Montage des Verdrängungstilgers vereinfacht und somit verbilligt. Hierbei können die Außenringhälften materialeinheitlich mit den Winkelringen 9 bestehen, welche somit die Funktionskammern allseitig umschließen.

### Bezugszeichenliste

1 Nabe
3 Steg
5 Gurt
7 Verdrängerflügel
8 Bohrung
9 Winkelring
11 Seitenscheibe
13 Außenring
15 Bogenfeder
17 Bogenfederschicht
19 Bolzen
23 Distanzstück
25 Distanzstuck
26 Mutter
27 Schraube
28 Senkung
31 Absatz
33 Schlitz
35 Abschnitt
37 Funktionskammer
41 Schraube
43 Kühlrippe
45 Bohrung
47 Bypass-Kanal
49 Bypass-Schraube
51 Entlüftungsbohrung
53 Entlüftungsschraube
55 O-Ring
57 PTFE-Band
59 PTFE-Scheibe

## Patentansprüche

1. Verdrängungstilger, insbesondere für Kolbenkraftmaschinen, mit einer mit der zu dämpfenden Welle verbundenen Primärmasse, welche mit einer Sekundärmasse unter Verwendung von Federelementen drehelastisch gekoppelt ist, und mit einem zur Dämpfung dienenden, zwischen Primärmasse und Sekundärmasse wirkenden Dämpfungsmedium, gekennzeichnet durch folgende Merkmale :
a) die Primärmasse des Verdrängungstilgers ist durch dessen mit der zu dämpfenden Welle verbundene Nabe (1), einen von der Nabe (1) sich erstreckenden Steg (3), einen vom Steg getragenen, axial sich erstreckenden Gurt (5) und vom Gurt radial abstehende Verdrängerflügel (7) gebildet;
b) die Sekundärmasse umschließt die Primärmasse zu beiden Seiten des Stegs (3) und am Außenumfang der Verdrängerflügel (7);
c) die Federelemente sind durch Bogenfedern (15) gebildet, welche an den beiden Seiten des Stegs (3) zur drehelastischen Ankoppelung der Sekundärmasse an die Primärmasse vorgesehen sind; und
d) die Verdrängerflügel (7) wirken zur Erzielung einer hydrodynamischen Dämpfung in mit Dämpfungsmedium gefüllten Funktionskammern (37) am Außenumfang der Sekundärmasse.

2. Verdrängungstilger, insbesondere für Kolbenkraftmaschinen, mit einer mit der zu dämpfenden Welle verbundenen Primärmasse, welche mit einer Sekundärmasse unter Verwendung von Federelementen drehelastisch gekoppelt ist, und mit einem zur Dämpfung dienenden, zwischen Primärmasse und Sekundärmasse wirkenden Dämpfungsmedium, gekennzeichnet durch folgende Merkmale :
a) die Primärmasse des Verdrängungstilgers ist durch dessen mit der zu dämpfenden Welle verbundene Nabe (1), einen von der Nabe (1) sich erstreckenden Steg (3) und vom Steg unmittelbar radial abstehende Verdrängerflügel (7) gebildet;
b) die Sekundärmasse umschließt die Primärmasse zu beiden Seiten des Stegs (3) und am Außenumfang der Verdrängerflügel (7);
c) die Federelemente sind durch Bogenfedern (15) gebildet, welche an den beiden Seiten des Stegs (3) zur drehelastischen Ankoppelung der Sekundärmasse an die Primärmasse vorgesehen sind; und
d) die Verdrängerflügel (7) wirken zur Erzielung einer hydrodynamischen Dämpfung in mit Dämpfungsmedium gefüllten Funktionskammern (37) am Außenumfang der Sekundärmasse.

3. Verdrängungstilger nach Anspruch 1 oder 2, gekennzeichnet durch folgende Merkmale :
a) zu beiden Seiten des Stegs (3) der Nabe (1) sind als Bestandteil der Sekundärmasse Winkelringe (9) vorgesehen, an welchen axial außerhalb die Bogenfedern (15) unter Winkelabstand zueinander befestigt sind;
b) die Bogenfedern (15) beider Seiten sind jeweils paarweise durch Bolzen (19) miteinander verbunden, welche in Axialrichtung den Steg (3) durchsetzen, derart, daß die Bolzen (19) an einem Einspannende der Bogenfedern (15) unter Spiel Bohrungen des Stegs (3) durchsetzen und unter enger Passung in den beidseitig befindlichen Winkel ringen (9) gehalten sind, während die Bolzen (19) des jeweils anderen Einspannendes der Bogenfedern (15) unter enger Passung den Steg (3) durchsetzen und mit Spiel in Bohrungen der Winkel ringe, durch diese sich erstreckend, geführt sind;
c) axial von außen sind, der Sekundärmasse zugehörig, Seitenscheiben (11) auf die Winkelringe (9) aufgesetzt und mit diesen verschraubt, derart, daß sich die Bogenfedern (15) in einer kreisringförmigen Ausnehmung zwischen den Winkelringen und den zugeordneten Seitenscheiben erstrecken;
d) an den Außenenden der Bolzen (17) sind Muttern (26) aufgeschraubt, mittels welchen die Bogenfedern (15) gegenüber der axialen Außenseite der Winkelringe verspannt sind; und
e) am Außenumfang des Verdrängungstilgers ist, gleichfalls der Sekundärmasse zugehörig, ein Außenring (13) vorgesehen, mit welchem die beiden Seitenscheiben (11), den Außenring zwischen sich begrenzend, verschraubt sind und an dessen Innenumfang sich die Funktionskammern (37) für die hydrodynamische Dämpfung befinden.

4. Verdrängungstilger nach Anspruch 2 oder 3, dadurch gekennzeichnet, daß axiale Fortsätze der Winkel ringe (9) die Funktionskammern radial innen begrenzen.

5. Verdrängunstilger nach Anspruch 1, dadurch gekennzeichnet, daß der Gurt (5) die Funktionskammern radial innen begrenzt.

6. Verdrängungstilger nach einem der vorangehenden Ansprüche, dadurch gekennzeichnet, daß die Bogenfedern (15) jeweils aus mehreren parallel zueinander verlaufenden Bogenfederschichten (17) bestehen.

7. Verdrängungstilger nach einem der vorangehenden Ansprüche, dadurch gekennzeichnet, daß pro Seite des Tilgers auf einem Kreis unter Winkelabstand zueinander wenigstens fünf Bogenfedern, bestehend aus jeweils sechs Bogenfederschichten, vorgesehen sind.

8. Verdrängungstilger nach einem der vorangehenden Ansprüche, dadurch gekennzeichnet, daß je Einspannende der Bogenfedern (15) wenigstens zwei Bolzen (19) vorgesehen sind.

9. Verdrängungstilger nach Anspruch 1 und 5, gekennzeichnet durch folgende Merkmale :
a) die axial außen auf die Winkelringe (9) aufgesetzten und mit diesen verschraubten Seitenscheiben (11) weisen an ihrem Außenumfang - radial innerhalb des Innenumfangs des Außenrings (13) - von außen nach innen axial sich erstreckende, durch Schlitze (33) unter Abstand zueinander gehaltene Abschnitte (35) auf, welche spiegelbildlich einander gegenüberliegen; und
b) die vom Gurt (5) der Nabe (1) radial nach außen unter Winkelabstand zueinander sich erstreckenden Verdrängerflügel (7) sind jeweils in einem der Schlitze (33) zwischen zwei Abschnitten (35) drehbar geführt, wobei die Schlitze die Funktionskammern (37) für die hydrodynamische Dämpfung bilden und durch den Außenumfang des Gurts (5), durch den Innenumfang des Außenrings (13) und jeweils durch die einander zugewandten Innenseiten zweier Abschnitte (35) begrenzt sind.

10. Verdrängungstilger nach Anspruch 2 und 4, gekennzeichnet durch folgende Merkmale:
a) die axial außen auf die Winkelringe (9) aufgesetzten und mit diesen verschraubten Seitenscheiben (11) weisen an ihrem Außenumfang - radial innerhalb des Innenumfangs des Außenrings (13) - von außen nach innen axial sich erstreckende, durch Schlitze (33) unter Abstand zueinander gehaltene Abschnitte (35) auf, welche spiegelbildlich einander gegenüberliegen; und
b) die unmittelbar vom Steg (3) radial nach außen unter Winkelabstand zueinander sich erstreckenden Verdrängerflügel (7) sind jeweils in einem der Schlitze (33) zwischen zwei Abschnitten (35) drehbar geführt, wobei die Schlitze die Funktionskammern (37) für die hydrodynamische Dämpfung bilden und durch die axialen Fortsätze der Winkel ringe, durch den Innenumfang des Außenrings (13) und jeweils durch die einander zugewandten Innenseiten zweier Abschnitte (35) begrenzt sind.

11. Verdrängungstilger nach Anspruch 9 oder 10, dadurch gekennzeichnet, daß die Funktionskammern mit den in ihnen geführten Verdrängerflügeln unter Winkelabstand zueinander auf dem gesamten Kreisringumfang des Tilgers angeordnet sind.

12. Verdrängungstilger nach einem der vorangehenden Ansprüche, gekennzeichnet durch enge Arbeitspalte, die zwischen den Verdrängerflügeln, den Seitenscheiben und dem Außenring bestehen, derart, daß bei einer Relativbewegung zwischen Primär- und Sekundärmasse eine Strömung des Dämpfungsmediums durch die Arbeitsspalte zur Erzeugung einer hydrodynamischen Dämpfung stattfindet.

13. Verdrängungstilger nach einem der vorangehenden Ansprüche, dadurch gekennzeichnet, daß zwischen den Funktionskammern jeweils Verbindungen in Form von Bypasskanälen bestehen, deren Querschnitt durch Bypassschrauben veränderbar ist.

14. Verdrängungstilger nach einem der vorangehenden Ansprüche, dadurch gekennzeichnet, daß an den Seitenscheiben radial sich erstreckend Kühlrippen (43) ausgebildet sind.

15. Verdrängungstilger nach einem der vorangehenden Ansprüche, dadurch gekennzeichnet, daß der Tilger in seinem Inneren von Mineralöl als Dämpfungsmedium gefüllt ist, und daß die Primärmasse gegenüber Außenluft durch statische und dynamische Dichtungen abgedichtet ist.

16. Verdrängungstilger nach Anspruch 15, dadurch gekennzeichnet, daß das Innere des Tilgers über eine Bohrung mit der Druckölversorgung von der Kurbelwelle verbunden ist.

17. Verdrängungstilger nach Anspruch 15, dadurch gekennzeichnet, daß das sich im Inneren des Tilgers eine gekapselte Menge von Mineralöl als Dämpfungsmedium befindet.

18. Verdrängungstilger nach einem der vorangehenden Ansprüche, dadurch gekennzeichnet, daß der Innenumfang der Winkelringe zu beiden Seiten des Stegs, relativ zu diesem drehbar, mittels vorgespannter 0-Ringe (55) gegenüber der Nabe (1) abgedichtet ist.

19. Verdrängungstilger nach einem der vorangehenden Ansprüche, gekennzeichnet durch PTFE-Elemente, die sich als Führungselemente in Axial- und Radialrichtung zwischen den Winkel ringen und der Nabe bzw. dem Steg befinden.

20. Verdrängungstilger nach einem der vorangehenden Ansprüche, gekennzeichnet durch dessen Verwendung als Kupplung.

## Claims

1. Displacement vibration damper, in particular for piston engines, having a primary mass connected to the shaft to be damped, this mass being coupled in a rotary-elastic fashion to a secondary mass using spring elements, and having a damping medium used for damping and being effective between the primary mass and the secondary mass, characterised by the following features:
a) the primary mass of the displacement damper is formed by its hub (1) connected to the shaft to be damped, a crosspiece (3) extending from the hub (1), an axially extending flange (5) carried by the crosspiece, and displacement blades (7) projecting radially from the flange;
b) the secondary mass includes the primary mass on both sides of the crosspiece (3) and on the outer circumference of the displacement blades (7);
c) the spring elements are formed by bow springs (15) which are provided on both sides of the crosspiece (3) for the rotary-elastic coupling of the secondary mass to the primary mass; and
d) the displacement blades (7) act on the outer circumference of the secondary mass to achieve a hydrodynamic damping in operational chambers (37) filled with damping medium.

2. Displacement damper, in particular for piston engines, having a primary mass connected to the shaft to be damped, this primary mass being coupled in a rotary-elastic fashion to a secondary mass using spring elements, and having a damping medium used for damping and acting between the primary mass and the secondary mass, characterised by the following features :
a) the primary mass of the displacement damper is formed by its hub (1) connected to the shaft to be damped, a crosspiece extending from the hub (1), and displacement blades (7) projecting radially directly from the crosspiece;
b) the secondary mass includes the primary mass on both sides of the crosspiece (3) and on the outer circumference of the displacement blades (7);
c) the spring elements are formed by bow springs (15) which are provided on both sides of the crosspiece (3) for the rotary-elastic coupling of the secondary mass to the primary mass; and
d) the displacement blades (7) act on the outer circumference of the secondary mass to achieve a hydrodynamic damping in operational chambers (37) filled with damping medium.

3. Displacement dampers according to claim 1 or 2, characterised by the following features :
a) angle rings (9), on which the bow springs (15) are secured axially outside and with an angular spacing from each other, are provided on both sides of the crosspiece (3) of the hub (1) as a component of the secondary mass;
b) the bow springs (15) on both sides are joined together, respectively, in pairs by pins (19) which penetrate the crosspiece (3) in the axial direction in such a way that at one clamping end of the bow springs (15) the pins (19) pass through bores in the crosspiece (3) with clearance and are held with a tight fit in the angle rings (9) located on both sides, whilst the pins (19) of the respective other clamping end of the bow springs (15) pass through the crosspiece (3) with a tight fit, and are guided and extend through with clearance the bores of the angle rings;
c) side discs (11), belonging to the secondary mass, are placed axially from the outside onto the angle rings (9) and are screwed to them in such a way that the bow springs (15) extend in a circular recess between the angle rings and the associated side discs;
d) screwed to the outer ends of the pins (17) are nuts (26) by means of which the bow springs (15) are clamped with respect to the axial outer side of the angle rings; and
e) provided on the outer circumference of the displacement damper is an outer ring (13), also belonging to the secondary mass, to which are screwed the two side discs (11) which limit the outer ring between them, and on whose inner circumference the operational chambers (37) for the hydrodynamic damping are located.

4. Displacement damper according to claim 2 or 3, characterised in that axial extensions of the angle rings (9) limit the operational chambers radially inwardly.

5. Displacement damper according to claim 1, characterised in that the flange (5) limits the operational chambers radially inwardly.

6. Displacement damper according to one of the preceding claims, characterisd in that the bow springs (15) respectively comprise several layers (17) of bow springs extending parallel to each other.

7. Displacement damper according to one of the preceding claims, characterised in that at least five bow springs, respectively comprising six layers of bow springs, are provided per side of the damper in a circle with angular spacing with respect to each other.

8. Displacement damper according to one of the preceding claims, characterised in that at least two pins (19) are provided for each clamping end of the bow springs (15).

9. Displacement damper according to claim 1 and 5, characterised by the following features:
a) the side discs (11), placed axially outside onto the angle rings (9) and screwed to them, have on their outer circumference - radially inside the inner circumference of the outer ring (13) sections (35) extending axially from the outside to the inside and held by slots (33) spaced apart from each other, which are opposite mirror images of each other; and
b) the displacement blades (7) extending radially outwards from the flange (5) of the hub (1), with an angular spacing from each other, are guided rotatably respectively in one of the slots (33) between two sections (35), the slots forming the operational chambers (37) for the hydrodynamic damping and being limited by the outer circumference of the flange (5), by the inner circumference of the outer ring (13) end by the facing inner sides of two sections 35, respectively.

10. Displacement damper according to claim 2 and 4, characterised by the following features:
a) the side discs (11) placed axially outside onto the angle rings (9) and screwed to them have on their outer circumference - radially inside the inner circumference of the outer ring (13) sections (35) extending axially from the outside to the inside and held by slots (33) spaced apart from each other, which are opposite mirror images of each other; and
b) the displacement blades (7) extending radially outwards from the crosspiece (3) with an angular spacing from each other are each rotatably guided in one of the slots (33) between two portions (35), the slots forming the operational chambers (37) for the hydrodynamic damping and being limited by the axial extensions of the angle rings, by the inner circumference of the outer ring (13) and by the facing inner sides of two sections (35), respectively.

11. Displacement damper according to claim 9 or 10, characterised in that the operational chambers are arranged over the entire circular periphery of the damper with the displacement blades guided in them and with an angular spacing from each other.

12. Displacement damper according to one of the preceding claims, characterised by narrow working gaps which are located between the displacement blades, the side discs and the outer ring in such a way that with a relative movement between the primary and the secondary mass there is a flow of damping medium through the working gaps to produce a hydrodynamic damping.

13. Displacement damper according to one of the preceding claims, characterised in that between the operational chambers respectively there are junctions in the form of bypass ducts, the cross-section of which can be changed by bypass screws.

14. Displacement damper according to one of the preceding claims, characterised in that cooling ribs (43) which extend radially are formed on the side discs.

15. Displacement damper according to one of the preceding claims, characterised in that the inside of the damper is filled with mineral oil as the damping medium, and in that the primary mass is sealed from external air by static and dynamic seals.

16. Displacement damper according to claim 15, characterised in that the inside of the damper is connected to the pressure oil supply from the crank shaft by means of a bore.

17. Displacement damper according to claim 15, characterised in that there is an amount of mineral oil enclosed inside the damper as a damping medium.

18. Displacement damper according to one of the preceeding claims, characterised in that the inner circumference of the angle rings on both sides of the crosspiece is sealed by means of pre-clamped O-rings (55) with respect to the hub (1), and is rotatable relatively to them.

19. Displacement damper according to one of the preceding claims, characterised by PTFE elements which are disposed as guide elements in the axial and radial direction between the angle rings and the hub or the crosspiece.

20. Displacement damper according to one of the preceding claims, characterised by its use as a coupling.

## Revendications

1. Amortisseur à refoulement, notamment pour moteurs à pistons, comportant une masse primaire reliée à l'arbre devant être amorti, qui est couplée, avec une élasticité en torsion, à une masse secondaire moyennant l'utilisation d'éléments élastiques, et comportant un fluide d'amortissement qui sert à réaliser l'amortissement et qui agit entre la masse primaire et la masse secondaire, caractérisé par les caractéristiques suivantes :
a) la masse primaire de l'amortisseur à refoulement est formée par le moyeu (1) de ce dernier, relié à l'arbre à amortir, par une barrette (3) s'étendant à partir du moyeu (1), par une membrure (5) qui est portée par la barrette et s'étend axialement, et par des ailettes de refoulement (7) qui font saillie radialement sur la membrure;
b) la masse secondaire entoure la masse primaire des deux côtés de la barrette (3) et sur la périphérie extérieure des ailettes de refoulement (7);
c) les éléments élastiques sont formés par des ressorts en arc (15), qui sont prévus des deux côtés de la barrette (3) pour réaliser le couplage, élastique en torsion, de la masse secondaire à la masse primaire; et
d) les ailettes de refoulement (7) agissent pour l'obtention d'un amortissement hydrodynamique dans des chambres fonctionnelles (37) remplies par le fluide d'amortissement et situées sur la périphérie extérieure de la masse secondaire.

2. Amortisseur à refoulement, notamment pour moteurs à pistons, comportant une masse primaire reliée à l'arbre devant être amorti, qui est couplée, avec une élasticité en torsion, à une masse secondaire moyennant l'utilisation d'éléments élastiques, et comportant un fluide d'amortissement qui sert à réaliser l'amortissement et qui agit entre la masse primaire et la masse secondaire, caractérisé par les caractéristiques suivantes :
a) la masse primaire de l'amortisseur à refoulement est formée par le moyeu (1) de ce dernier, qui est relié à l'arbre à amortir, par une barrette (3) qui s'étend à partir du moyeu (1) et par des ailettes de refoulement (7) qui font saillie radialement directement sur la barrette;
b) la masse secondaire entoure la masse primaire des deux côtés de la barrette (3) et sur la périphérie extérieure des ailettes de refoulement (7);
c) les éléments élastiques sont formés par des ressorts en arc (15), qui sont prévus des deux côtés de la barrette (3) pour réaliser le couplage, élastique en torsion, de la masse secondaire à la masse primaire; et
d) les ailettes de refoulement (7) agissent pour l'obtention d'un amortissement hydrodynamique dans des chambres fonctionnelles (37) remplies par le fluide d'amortissement et situées sur la périphérie extérieure de la masse secondaire.

3. Amortisseur à refoulement selon la revendication 1 ou 2, caractérisé par les caractéristiques suivantes :
a) des deux côtés de la barrette (3) du moyeu (1) sont prévues, en tant que parties constitutives de la masse secondaire, des cornières annulaires (9), sur lesquelles les ressorts en arc (15) sont fixés axialement à l'extérieur, à intervalle angulaire l'un de l'autre,
b) les ressorts en arc (15), des deux côtés, sont reliés entre eux respectivement par couples, par des boulons (19), qui traversent la barrette (3) dans la direction axiale de telle façon que les boulons (19) traversent, avec du jeu, des perçages de la barrette (3), au niveau d'une extrémité de serrage des ressorts en arc (15), et sont retenus, selon un ajustement étroit, dans les cornières annulaires (9) situées des deux côtés, tandis que les boulons (19) de l'autre extrémité respective de serrage des ressorts en arc (15) traversent la barrette (3), selon un ajustement étroit, et sont guidés, avec du jeu, dans des perçages des cornières angulaires, en s'étendant à travers ces dernières;
c) des disques latéraux (11), appartenant à la masse secondaire, sont disposés, axialement de l'extérieur, sur les cornières annulaires (9) et sont vissés à ces dernières, de telle sorte que les ressorts en arc (15) s'étendent dans un évidement en forme d'anneau circulaire entre les cornières annulaires et les disques latéraux associés;
d) sur les extrémités extérieures des boulons (17), sont vissés des écrous (26), à l'aide desquels les ressorts en arc (15) sont serrés par rapport à la face extérieure axiale des cornières annulaires; et
e) sur la périphérie extérieure de l'amortisseur à refoulement, est prévue un anneau extérieur (13), appartenant également à la masse secondaire, avec lequel les deux disques latéraux (11) sont vissés, en enserrant entre eux l'anneau extérieur, les chambres fonctionnelles (37) pour l'amortissement hydrodynamique étant situées sur la périphérie intérieure de cet anneau extérieur.

4. Amortisseur à refoulement selon la revendication 2 ou 3, caractérisé en ce que des prolongements axiaux des cornières annulaires (9) délimitent radialement vers l'intérieur les chambres fonctionnelles.

5. Amortisseur à refoulement selon la revendication 1, caractérisé en ce que la membrure (5) délimite radialement vers l'intérieur les chambres fonctionnelles.

6. Amortisseur à refoulement selon l'une des revendications précédentes, caractérisé en ce que les ressorts en arc (15) sont constitués chacun par plusieurs couches de ressorts en arc (17), qui sont parallèles les unes aux autres.

7. Amortisseur à refoulement selon l'une des revendications précédentes, caractérisé en ce qu'au moins cinq ressorts en arc, constitués chacun de six couches de ressorts en arc, sont prévus, sur chaque côté de l'amortisseur, à intervalle angulaire l'un de l'autre, sur un cercle.

8. Amortisseur à refoulement selon l'une des revendications précédentes, caractérisé en ce qu'au moins deux boulons (19) sont prévus à chaque extrémité de serrage des ressorts en arc (15).

9. Amortisseur à refoulement selon les revendications 1 et 5, caractérisé par les caractéristiques suivantes:
a) les disques latéraux (11), qui sont appliqués axialement, à l'extérieur, sur les cornières annulaires (9) et sont vissés à ces dernières, possèdent, sur leur périphérie extérieure, radialement à l'intérieur de la périphérie intérieure de l'anneau extérieur (13), des segments (35) qui s'étendent axialement de l'extérieur vers l'intérieur et sont maintenus à distance mutuelle par des fentes (33) et qui sont situées symétriquement en vis-à-vis les uns des autres; et
b) les ailettes de refoulement (7), qui s'étendent radialement vers l'extérieur à partir de la membrure (5) du moyeu (1), à intervalle angulaire l'une de l'autre, sont guidées, avec possibilité de rotation, chacune dans l'une des fentes (33) présente entre deux segments (35), les fentes formant les chambres fonctionnelles (37) pour l'amortissement hydrodynamique et étant délimitées par la périphérie extérieure de la membrure (5), par la périphérie intérieure de l'anneau extérieur (13) et par les côtés intérieurs, tournés l'un vers l'autre, de deux segments respectifs (35).

10. Amortisseur à refoulement selon les revendications 2 et 4, caractérisé par les caractéristiques suivantes :
a) les disques latéraux (11), qui sont appliqués, axialement à l'extérieur, sur les cornières annulaires (9) et sont vissés à ces dernières, possèdent, sur leur périphérie extérieure, radialement à l'intérieur de la périphérie intérieure de l'anneau extérieur (13), des segments (35) qui s'étendent axialement de l'extérieur vers l'intérieur et sont maintenus à distance mutuelle par des fentes (33) et qui sont situés symétriquement en vis-à-vis les uns des autres; et
b) les ailettes de refoulement (7), qui s'étendent radialement vers l'extérieur, directement sur la barrette (3), en étant à intervalle angulaire l'une de l'autre, sont guidées, de manière à pouvoir tourner, chacune dans l'une des fentes (33) présente entre deux segments (35), les fentes formant les chambres fonctionnelles (37) pour l'amortissement hydrodynamique et étant délimitées par les prolongements axiaux des corniches annulaires, par la périphérie intérieure de l'anneau extérieur (13) et par les côtés intérieurs, tournés l'un vers l'autre, de deux segments respectifs (35).

11. Amortisseur à refoulement selon la revendication 9 ou 10, caractérisé en ce que les chambres fonctionnelles avec les ailettes de refoulement, guidées dans ces chambres, sont disposées à intervalle angulaire l'une de l'autre sur la périphérie entière de l'anneau circulaire de l'amortisseur.

12. Amortisseur à refoulement selon l'une des revendications précédentes, caractérisé par d'étroites fentes de travail, qui existent entre les ailettes de refoulement, les disques latéraux et l'anneau extérieur, de telle sorte que lors d'un déplacement relatif entre la masse primaire et la masse secondaire, il se produise un écoulement du fluide d'amortissement à travers les fentes de travail pour la production d'un amortissement hydrodynamique.

13. Amortisseur à refoulement selon l'une des revendications précédentes, caractérisé en ce qu'entre les chambres fonctionnelles, il existe des liaisons respectives se présentant sous la forme de canaux de dérivation, dont la section transversale peut être modifiée par des vis de dérivation.

14. Amortisseur à refoulement selon l'une des revendications précédentes, caractérisé en ce que, sur les disques latéraux, sont formées des ailettes de refroidissement (43) s'étendant radialement.

15. Amortisseur à refoulement selon l'une des revendications précédentes, caractérisé en ce que l'amortisseur est rempli intérieurement par de l'huile minérale, en tant que fluide d'amortissement, et en ce que la masse primaire est étanchéifiée par rapport à l'air extérieur, par des garnitures d'étanchéité statiques et dynamiques.

16. Amortisseur à refoulement selon la revendication 15, caractérisé en ce que l'intérieur de l'amortisseur est relié, par l'intermédiaire d'un perçage, au circuit d'alimentation en huile sous pression du vilebrequin.

17. Amortisseur à refoulement selon la revendication 15, caractérisé en ce qu'une quantité encapsulée d'huile minérale est située, en tant que fluide d'amortissement, à l'intérieur de l'amortisseur.

18. Amortisseur à refoulement selon l'une des revendications précédentes, caractérisé en ce que la périphérie intérieure des cornières annulaires est étanchéifiée par rapport au moyeu (1), des deux côtés de la barrette, d'une manière lui permettant de tourner par rapport à cette dernière, au moyen de joints toriques précontraints (55).

19. Amortisseur à refoulement selon l'une des revendications précédentes, caractérisé par des éléments en PTFE, qui sont situés, en tant qu'éléments de guidage dans la direction axiale et dans la direction radiale, entre les cornières annulaires et le moyeu ou la barrette.

20. Amortisseur à refoulement selon l'une des revendications précédentes, caractérisé par son utilisation en tant qu'accouplement.
